# EUROPEAN PATENT APPLICATION

(11) **EP 2 196 992 A1**
(43) Date of publication of application: **16.06.2010**
(21) Application number: 09172031.8
(22) Date of filing: 02.10.2009
(51) Int. Cl.: G11B 7/09, G11B 7/095

(54) **Optical pickup actuator and optical recording/reproducing apparatus having the same**

(30) Priority: 15.12.2008 KR 20080127366
(71) Applicant: SAMSUNG ELECTRONICS CO., LTD., Suwon-si Gyeonggi-do 442-742 (KR)
(72) Inventor: Park, Se-june, Seoul (KR); Kim, Seok-jung, Gyeongsangnam-do (KR)
(74) Representative: D'Halleweyn, Nele Veerle Trees Gertrudis

(57) **Abstract**

An optical pickup actuator (100) and an optical recording/reproducing apparatus are provided. The optical pickup actuator (100) can include a three-axial driving unit (200) to independently drive an objective lens (L) to focus a laser beam onto a disk in a focusing direction (F), a tracking direction (R) and a radial-tilt direction (RT), respectively, and a tangential-tilt driving unit (300) to drive the three-axial driving unit (200) in a tangential-tilt direction (TT) to drive the objective lens (L) in the tangential-tilt direction (TT).

## Description

### TECHNICAL FIELD OF THE INVENTION

The present general inventive concept relates to an optical pickup actuator and an optical recording/reproducing apparatus, and more particularly, to an optical pickup actuator capable of driving an object lens in four directions, and an optical recording/reproducing apparatus having the optical pickup actuator.

### BACKGROUND OF THE INVENTION

An optical recording/reproducing apparatus includes an optical pickup to irradiate a laser beam onto an optical recording medium such as a compact disc (CD) or a digital versatile disc (DVD) so as to record/reproduce information onto/from the optical recording medium. The optical pickup requires an optical system having an objective lens to focus a laser beam onto an optical recording medium, and an optical pickup actuator to drive the objective lens in a focusing direction and a tracking direction.

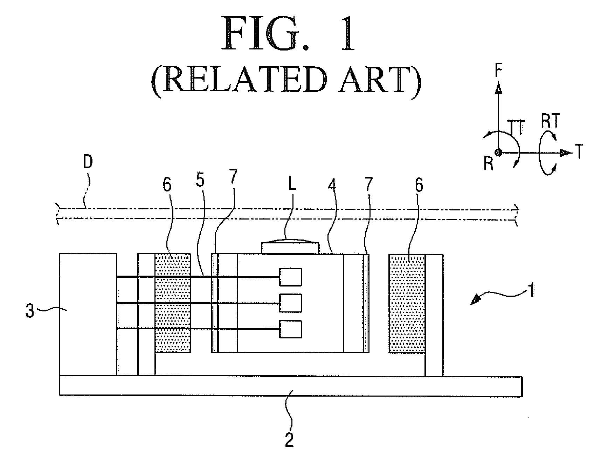

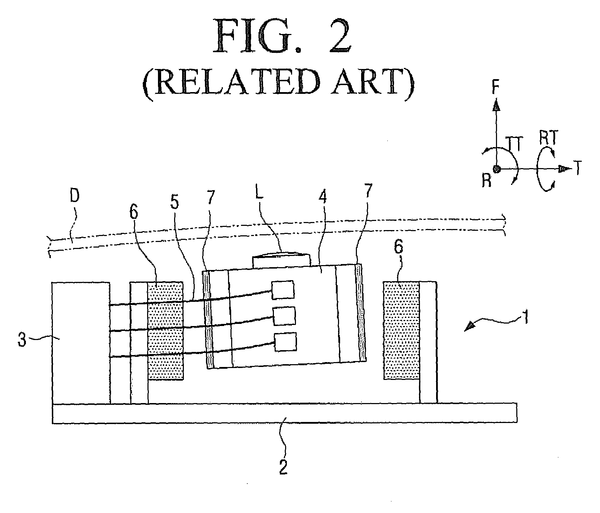

FIG. 1 is a side view schematically illustrating an example of an optical pickup actuator, and FIG. 2 is a side view illustrating the optical pickup actuator of FIG. 1 after the optical pickup actuator of FIG. 1 performs tangential-tilt driving. In FIG. 1, an optical pickup actuator 1 includes a base 2, a wire holder 3 mounted on one side of the base 2, a lens holder 4 having an objective lens L, and a plurality of wires 5 to connect the wire holder 3 to the lens holder 4 and to support the lens holder 4.

The optical pickup actuator 1 further includes magnets 6 and coils 7 to provide an electromagnetic force to the lens holder 4 having the objective lens L. A set of the magnets 6 and coils 7 associated with generation of electromagnetic forces to drive the objective lens L in the optical pickup actuator 1 is typically referred to as a 'magnetic circuit'.

The lens holder 4 may be driven in four directions by electromagnetic forces generated by interactions between the magnets 6 and coils 7. In more detail, the lens holder 4 may be driven in a focusing direction F so as to come close to or move apart from a disk D; or in a tracking direction R along a radial direction of the disk D so as to traverse tracks on the disk D; or in a radial-tilt direction RT so as to tilt about a rotational axis parallel to a tangential direction T of the tracks; or in a tangential-tilt direction TT so as to tilt about a rotational axis parallel to the tracking direction R. The optical pickup actuator 1 capable of driving the lens holder 4 in the four directions is generally referred to as a 'four-axial driving optical pickup actuator'.

Referring to FIG. 2, when a curvature is formed in the tracking direction R during keeping or use of the disk D, the lens holder 4 may be driven in the tangential-tilt direction. In more detail, when the disk D is placed parallel to the objective lens L as illustrated in FIG. 1, there is no need to drive the lens holder 4 in the tangential-tilt direction. Alternatively, when the disk D tilts about an axis parallel to the tracking direction R, the optical pickup actuator 1 drives the lens holder 4 in the tangential-tilt direction TT so that the lens holder 4 becomes parallel to the disk D. The driving in the tangential-tilt direction, namely tangential-tilt driving, makes it possible to smoothly perform focusing and tracking of the objective lens L.

However, during tangential-tilt driving, gaps between the coils 7 and magnets 6 change irregularly in the focusing direction F, as illustrated in FIG. 2. Such change in the gaps may cause a change in magnetic fluxes of the magnets 6 acted on the coils 7. Additionally, the plurality of wires 5 for supporting the lens holder 4 may be bent, so supporting forces of the plurality of wires 5 to support the lens holder 4 may also change.

Accordingly, the change in the gaps between the coils 7 and magnets 6 and the bending of the plurality of wires 5 during tangential-tilt driving may contribute to deterioration in a stability of focusing driving, tracking driving and radial-tilt driving. In other words, characteristics of servo control to drive the objective lens L may be deteriorated

### SUMMARY OF THE INVENTION

Example embodiments of the present general inventive concept can provide an optical pickup actuator capable of preventing a deterioration in servo control characteristics while driving an objective lens in four directions, and an optical recording/reproducing apparatus having the optical pickup actuator.

Additional embodiments of the present general inventive concept will be set forth in part in the description which follows and, in part, will be obvious from the description, or may be learned by practice of the general inventive concept.

Embodiments of the present general inventive concept may be achieved by providing an optical pickup actuator including a three-axial driving unit to independently drive an objective lens to focus a laser beam onto a disk in a focusing direction, a tracking direction and a radial-tilt direction, respectively, and a tangential-tilt driving unit to drive the three-axial driving unit in a tangential-tilt direction to drive the objective lens in the tangential-tilt direction.

The tangential-tilt driving unit may include a pivot support to support the three-axial driving unit to be pivotable about an axis parallel to the tangential-tilt direction; and a tangential-tilt driving magnetic circuit to provide an electromagnetic force to enable the three-axial driving unit to be pivotable about the axis parallel to the tangential-tilt direction.

The three-axial driving unit may include a base, a first wire holder and a second wire holder separated from each other on the base in a tangential direction, a lens holder disposed between the first wire holder and the second wire holder and spaced apart from the base by a predetermined distance, the lens holder having the objective lens, a plurality of wires, of which first ends are connected to one of the first wire holder and the second wire holder and second ends are connected to the lens holder, to support the lens holder, and a three-axial driving magnetic circuit to drive the lens holder in the focusing direction, tracking direction and radial-tilt direction.

The tangential-tilt driving magnetic circuit may include one or more first tangential-tilt coils attached to the first wire holder, and one or more second tangential-tilt coils attached to the second wire holder, and one or more first tangential-tilt magnets disposed to face the one or more first tangential-tilt coils, and one or more second tangential-tilt magnets disposed to face the one or more second tangential-tilt coils. An electromagnetic force generated by the one or more first tangential-tilt coils and one or more first tangential-tilt magnets may flow in an opposite direction to an electromagnetic force generated by the one or more second tangential-tilt coils and one or more second tangential-tilt magnets.

The tangential-tilt driving magnetic circuit may further include a first tangential-tilt yoke and a second tangential-tilt yoke to which the one or more first tangential-tilt magnets and one or more second tangential-tilt magnets are attached, respectively.

The one or more first tangential-tilt coils and one or more second tangential-tilt coils may be provided in pairs and attached to opposite sides of the first wire holder and opposite sides of the second wire holder in the tracking direction. The one or more first tangential-tilt magnets and one or more second tangential-tilt magnets may be provided in pairs.

The tangential-tilt driving magnetic circuit may further include a pair of first tangential-tilt yokes to which a pair of first tangential-tilt magnets are attached, and a pair of second tangential-tilt yokes to which a pair of second tangential-tilt magnets are attached.

The pivot support may include a pair of leaf springs disposed to face each other in the tracking direction to support a lower side of the base.

The tangential-tilt driving unit may further include a support member to support the first and second tangential-tilt yokes and the pair of leaf springs.

The support member may be formed integrally with the first and second tangential-tilt yokes.

Example embodiments of the present general inventive concept may also be achieved by providing an optical recording/reproducing apparatus including an optical pickup to record information onto a disk/to reproduce the information from the disk, a driving unit to drive the optical pickup, and a control unit to control the driving unit. The optical pickup may include an optical system to detect a laser beam reflected from the disk, the optical system having an objective lens to focus a laser beam onto the disk, and an optical pickup actuator to drive the objective lens. The optical pickup actuator may include a three-axial driving unit to independently drive the objective lens in a focusing direction, a tracking direction and a radial-tilt direction, respectively, and a tangential-tilt driving unit to drive the three-axial driving unit in a tangential-tilt direction to drive the objective lens in the tangential-tilt direction.

It is possible for the optical pickup actuator and optical recording/reproducing apparatus of the present general inventive concept to prevent an instability of focusing driving, tracking driving and radial-tilt driving of the objective lens caused by tangential-tilt driving of the objective lens. It is also possible to increase servo control characteristics of the objective lens compared to the related art.

### BRIEF DESCRIPTION OF THE DRAWINGS

These and/or other embodiments of the present general inventive concept will become apparent and more readily appreciated from the following description of the embodiments, taken in conjunction with the accompanying drawings of which:

FIG. 1 is a side view schematically illustrating an example of an optical pickup actuator;

FIG. 2 is a side view illustrating the optical pickup actuator of FIG. 1 after the optical pickup actuator of FIG. 1 performs tangential-tilt driving;

FIG. 3 is a schematic view illustrating an optical recording/reproducing apparatus according to an exemplary embodiment of the present general inventive concept;

FIG. 4 is a schematic perspective view illustrating an optical pickup actuator according to an exemplary embodiment of the present general inventive concept;

FIG. 5 is a plane view illustrating the optical pickup actuator of FIG. 4;

FIG. 6 is a partially exploded perspective view illustrating the optical pickup actuator of FIG. 4;

FIG. 7 is a schematic view illustrating elements of a three-axial driving unit illustrated in FIG. 6 when a lens holder has been removed from the optical pickup actuator; and

FIG. 8 is a side view illustrating the optical pickup actuator of FIG. 4 after the optical pickup actuator of FIG. 4 performs tangential-tilt driving.

### DETAILED DESCRIPTION OF THE EMBODIMENTS

Reference will now be made in detail to the embodiments of the present general inventive concept, examples of which are illustrated in the accompanying drawings, wherein like reference numerals refer to the like elements throughout. The embodiments are described below in order to explain the present general inventive concept by referring to the figures.

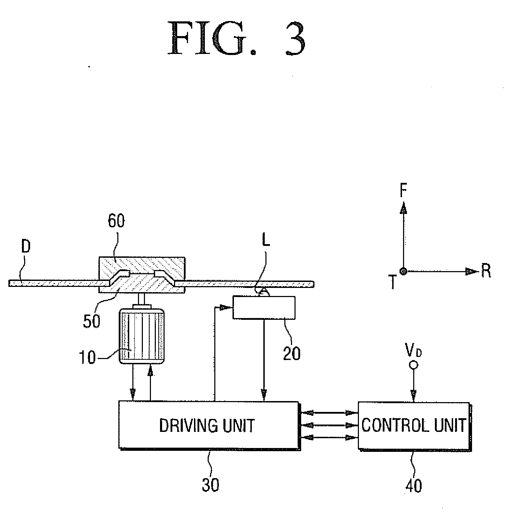

FIG. 3 is a schematic view illustrating an optical recording/reproducing apparatus according to an exemplary embodiment of the present general inventive concept.

In FIG. 3, the optical recording/reproducing apparatus can include a spindle motor 10 to rotate a disk D, an optical pickup 20 to record information onto the disk D/to reproduce the information from the disk D, a driving unit 30 to drive the spindle motor 10 and the optical pickup 20, and a control unit 40 to control the driving unit 30 to drive the optical pickup 20. Herein, reference numeral 50 indicates a turntable on which the disk D is settled, and reference numeral 60 indicates a clamp to chuck or clamp the disk D.

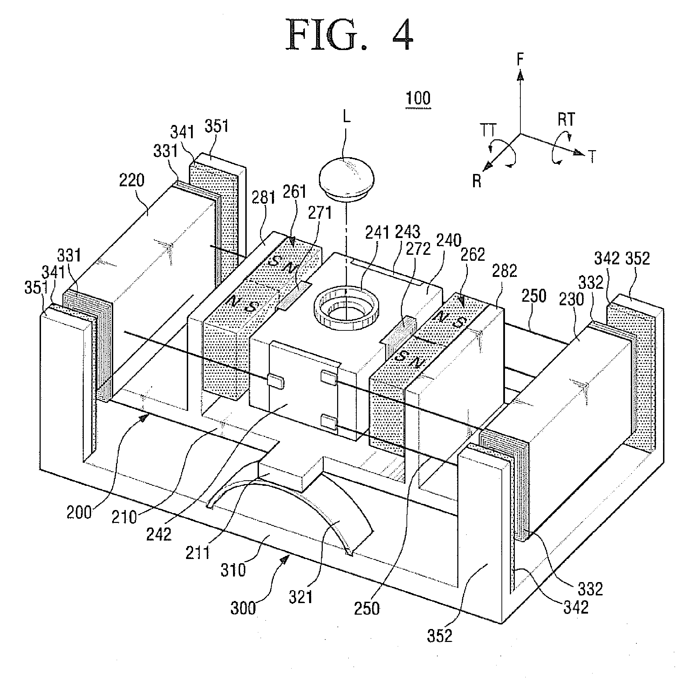

The optical pickup 20 can include an optical system including an objective lens L to focus a laser beam onto the disk D, and an optical pickup actuator 100 (see FIG. 4) to move the objective lens L with respect to the disk D. The optical pickup actuator 100 will be described in more detail below. The optical pickup 20 may detect the laser beam reflected from the disk D, may convert the detected laser beam into an electrical signal, and may transmit the electrical signal to the driving unit 30.

The driving unit 30 may drive the spindle motor 10 and the optical pickup 20 in response to control signals provided by the control unit 40, and may send data on a speed of the spindle motor 10 along with a signal received from the optical pickup 20 to the control unit 40.

The control unit 40 may provide the driving unit 30 with a control signal to control the spindle motor 10 based on the data on the speed of the spindle motor 10 and with a control signal to control the optical pickup 20 based on the signal received from the optical pickup 20.

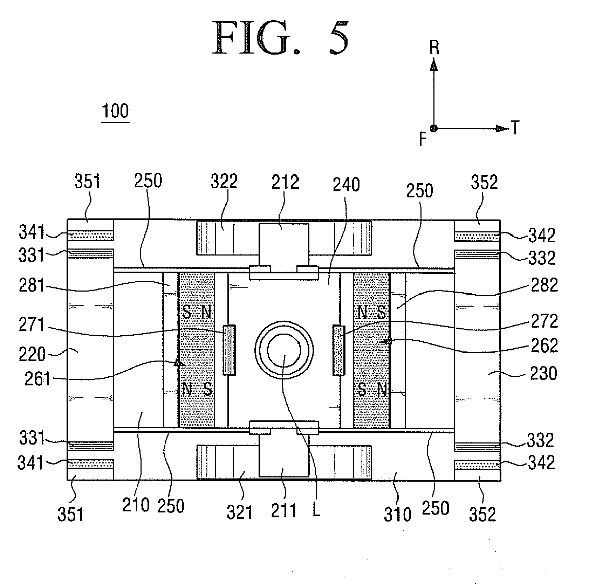

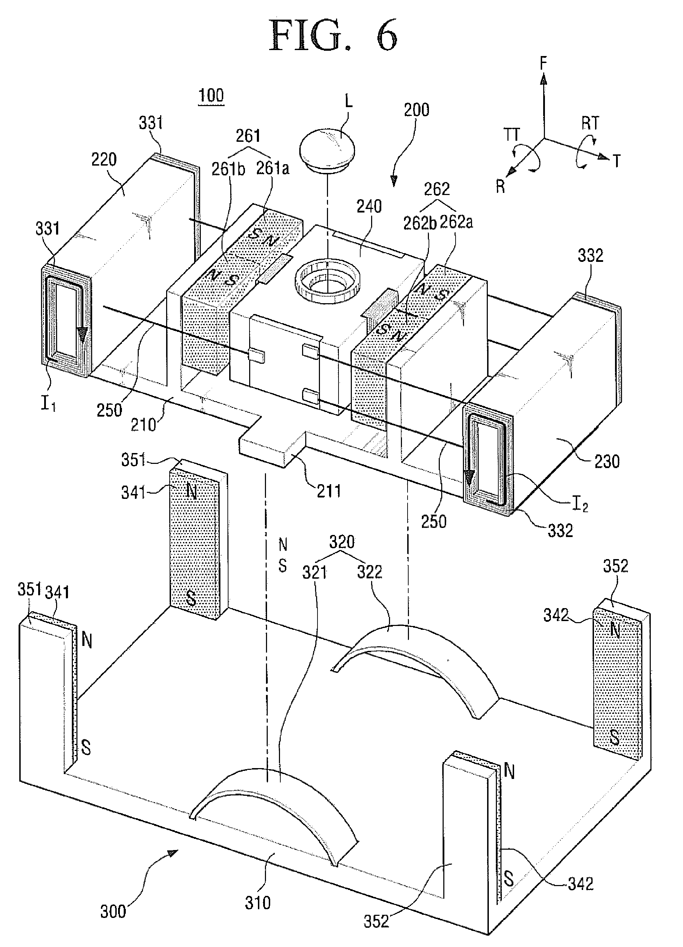

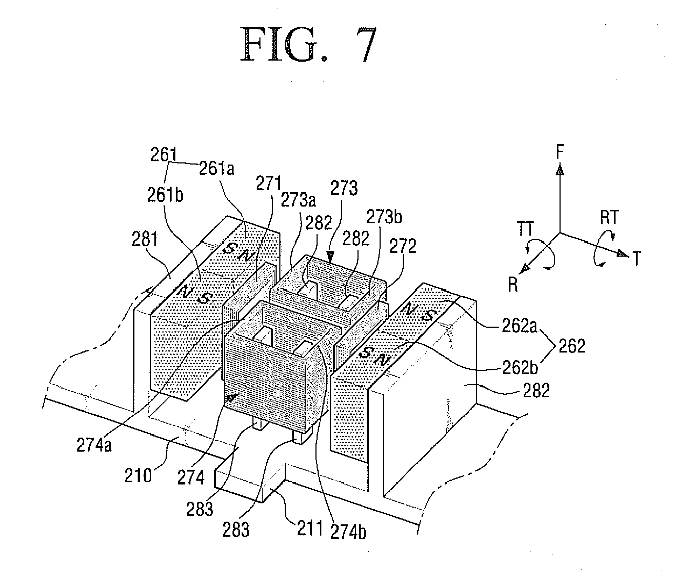

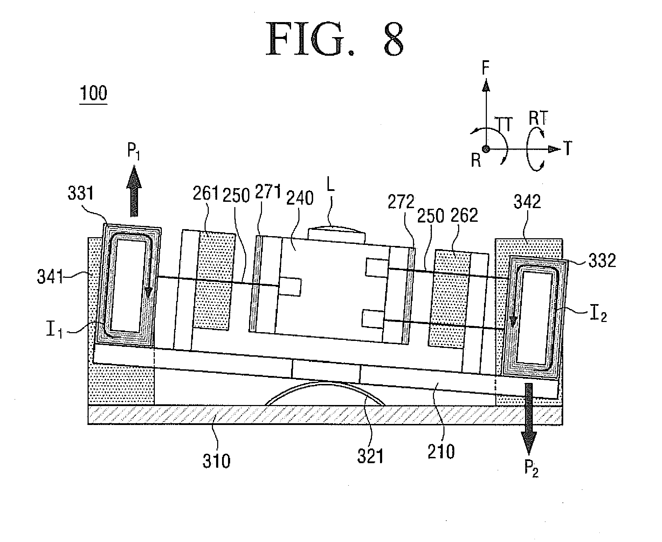

FIG. 4 is a schematic perspective view illustrating the optical pickup actuator 100 according to an exemplary embodiment of the present general inventive concept; FIG. 5 is a plane view illustrating the optical pickup actuator 100 of FIG. 4; FIG. 6 is a partially exploded perspective view illustrating the optical pickup actuator 100 of FIG. 4; FIG. 7 is a schematic view illustrating elements of a three-axial driving unit 200 illustrated in FIG. 6 when a lens holder 240 has been removed from the optical pickup actuator 100; and FIG. 8 is a side view illustrating the optical pickup actuator 100 of FIG. 4 after the optical pickup actuator 100 of FIG. 4 performs tangential-tilt driving.

Referring to FIGS. 4 to 6, the optical pickup actuator 100 can include a three-axial driving unit 200 and a tangential-tilt driving unit 300, as illustrated in FIG. 6.

The three-axial driving unit 200 may independently drive the objective lens L in a focusing direction F, a tracking direction R and a radial-tilt direction RT, respectively. In other words, the three-axial driving unit 200 may independently perform focusing driving, tracking driving and radial-tilt driving of the objective lens L.

As illustrated in FIGS. 4-6, the three-axial driving unit 200 can include a base 210, a first wire holder 220, a second wire holder 230, a lens holder 240, a plurality of wires 250, and a three-axial driving magnetic circuit to drive the lens holder 240 having the objective lens L in the focusing direction F, tracking direction R and radial-tilt direction RT. The three-axial driving magnetic circuit will be described in more detail below with reference to FIG. 7.

Referring to FIGS. 4-6, the base 210 can take the form of a plate with a hole in the center, and can provide a space in which elements of the three-axial driving unit 200 other than the base 210 can be mounted, although the present general inventive concept is not limited thereto. Additionally, a pair of arms 211 and 212 can extend from opposite sides of the base 210 in the tracking direction R in order to enable the three-axial driving unit 200 to be easily supported by the tangential-tilt driving unit 300 that will be described later.

The first and second wire holders 220 and 230 can have substantially rectangular shapes, and can be mounted on opposite sides of the base 210 in the tangential direction T, although the present general inventive concept is not limited to any particular shape of the first and second wire holders. As illustrated in FIG. 4, the first wire holder 220 can be disposed on the left side of the base 210, and the second wire holder 230 can be disposed on the right side of the base 210.

The lens holder 240 can be disposed substantially on the center of the base 210 between the first wire holder 220 and the second wire holder 230. The lens holder 240 can include an inner hollow portion with opened upper and lower ends, and can have a substantially rectangular parallelepiped shape, but is not limited thereto. A lens mounting part 241 on which the objective lens L is mounted can be formed on the upper center portion of the lens holder 240, and a pair of wire connection members 242 and 243 to which each of the plurality of wires 250 is attached can be formed on opposite sides of the lens holder 240 in the tracking direction R.

The plurality of wires 250 are typically referred to as suspensions. First ends of the plurality of wires 250 may be fixed to the first wire holder 220 or second wire holder 230, and second ends of the plurality of wires 250 may be attached to the wire connection members 242 or 243 by soldering. Accordingly, the plurality of wires 250 may support the lens holder 240 so that the lens holder 240 may be spaced apart from the base 210 by a predetermined distance. Additionally, the plurality of wires 250 may supply electric currents to coils included in the three-axial driving magnetic circuit of the three-axial driving unit 200.

As illustrated in FIG. 7, the three-axial driving magnetic circuit can be provided to drive the lens holder 240 having the objective lens L in the focusing direction F, tracking direction R and radial-tilt direction RT.

Referring to FIG. 7, the three-axial driving magnetic circuit can include a first three-axial driving magnet 261, a second three-axial driving magnet 262, a first tracking coil 271, a second tracking coil 272, a first focusing/radial-tilt coil 273, a second focusing/radial-tilt coil 274, a pair of outer yokes 281, and two pairs of inner yokes 282, 283.

The first and second three-axial driving magnets 261, 262 can be separated in the tangential direction T to face each other with the lens holder 240 (see FIG. 5) interposed therebetween. The first and second three-axial driving magnets 261, 262 can generate magnetic fluxes to drive the lens holder 240 in the focusing direction F, tracking direction R and/or radial-tilt direction RT.

As illustrated in FIG. 7, each of the first and second three-axial driving magnets 261, 262 can be configured in the form of a set of two magnets, namely, polar magnets, although the present general inventive concept is not limited thereto. In other words, the first three-axial driving magnet 261 can include a first portion 261 a in which an N pole is directed toward the lens holder 240, and a second portion 261 b in which an S pole is directed toward the lens holder 240. Additionally, the second three-axial driving magnet 262 can include a first portion 262a in which an N pole is directed toward the lens holder 240, and a second portion 262b in which an S pole is directed toward the lens holder 240.

The first and second tracking coils 271, 272 can be attached to opposite sides of the lens holder 240 in the tangential direction, and can be repeatedly wound in rectangular form, as illustrated in FIG. 7. The first tracking coil 271 can be provided through which a magnetic flux flows from the first portion 261 a of the first three-axial driving magnet 261 to the second portion 261 b, so if a current flows through the first tracking coil 271, the first tracking coil 271 can be subject to an electromagnetic force acting in the tracking direction R according to the Fleming's left-hand rule. Similarly, when a current flows through the second tracking coil 272, the second tracking coil 272 can be subject to an electromagnetic force acting in the tracking direction R by interaction with a magnetic flux of the second three-axial driving magnet 262. Accordingly, it is possible to drive the lens holder 240 to which the first and second tracking coils 271, 272 are attached in the tracking direction R by controlling the direction and amount of currents flowing through the first and second tracking coils 271, 272.

The first and second focusing/radial-tilt coils 273, 274 can be attached to the inside of the lens holder 240, and can be repeatedly wound in a direction parallel to the base 210. The first focusing/radial-tilt coil 273 can be affected by a magnetic flux generated by the first portion 261 a of the first three-axial driving magnet 261 and the first portion 262a of the second three-axial driving magnet 262. The generated magnetic flux can flow through two portions 273a, 273b of the first focusing/radial-tilt coil 273 which face each other in the tangential direction. Accordingly, when a current flows through the first focusing/radial-tilt coil 273, the first focusing/radial-tilt coil 273 can be subject to an electromagnetic force acting in the focusing direction F according to the Fleming's left-hand rule. Similarly, when a current flows through the second focusing/radial-tilt coil 274, a magnetic flux generated by the second portion 261 b of the first three-axial driving magnet 261 and the second portion 262b of the second three-axial driving magnet 262 can cause an electromagnetic force acting in the focusing direction F to be generated in two portions 274a, 274b of the second focusing/radial-tilt coil 274 which face each other in the tangential direction.

Accordingly, it is possible to drive the lens holder 240 to which the first and second focusing/radial-tilt coils 273, 274 are attached in the focusing direction F or in the radial-tilt direction RT by controlling the direction and amount of currents flowing through the first and second focusing/radial-tilt coils 273, 274. For example, in order to drive the lens holder 240 in the focusing direction F, the direction of currents flowing through the first and second focusing/radial-tilt coils 273, 274 may be controlled so that electromagnetic forces acting in the same direction may be applied to the first and second focusing/radial-tilt coils 273, 274. Additionally, in order to drive the lens holder 240 in the radial-tilt direction RT, the direction of currents flowing through the first and second focusing/radial-tilt coils 273, 274 may be controlled so that electromagnetic forces acting in opposite directions may be applied to the first and second focusing/radial-tilt coils 273, 274.

The pair of outer yokes 281 can be disposed orthogonal to the base 210 with the lens holder 240 interposed therebetween. In an exemplary embodiment of the present general inventive concept, a pair of outer yokes 281 can be formed integrally with the base 210. The pair of outer yokes 281 may support the first and second three-axial driving magnets 261, 262, and may guide magnetic fluxes generated by the first and second three-axial driving magnets 261, 262 so that the magnetic fluxes may concentratively flow towards the lens holder 240.

The two pairs of inner yokes 282, 283 can be disposed inside the first and second focusing/radial-tilt coils 273, 274, respectively. In an exemplary embodiment of the present general inventive concept, the two pairs of inner yokes 282, 283 can be formed integrally with the base 210. The two pairs of inner yokes 282, 283 may guide magnetic fluxes generated by the first and second three-axial driving magnets 261, 262 so that the magnetic fluxes may flow towards the first and second focusing/radial-tilt coils 273, 274.

As described above, the three-axial driving unit 200 can include the three-axial driving magnetic circuit including the first and second three-axial driving magnets 261, 262, the first and second tracking coils 271, 272, the first and second focusing/radial-tilt coils 273, 274 and the yokes 281, 282, 283. Accordingly, the three-axial driving unit 200 may drive the objective lens L in the focusing direction, tracking direction and radial-tilt direction using the three-axial driving magnetic circuit.

The tangential-tilt driving unit 300 may drive the three-axial driving unit 200 in the tangential-tilt direction TT so that the objective lens L mounted in the lens holder 240 may also be driven in the tangential-tilt direction TT.

Referring to FIGS. 4 to 6, the tangential-tilt driving unit 300 can include a support member 310, a pivot support 320 and a tangential-tilt driving magnetic circuit.

The support member 310 can have a shape of a rectangular plate, and can provide a space in which elements of the tangential-tilt driving unit 300 other than the support member 310 are able to be mounted, although the present general inventive concept is not limited thereto.

The pivot support 320 can include a pair of leaf springs 321, 322, which can be mounted on opposite ends of the support member 310 in the tracking direction R to face each other. The pair of leaf springs 321, 322 may come into contact with lower surfaces of the pair of arms 211, 212 extending from the base 210 of the three-axial driving unit 200 so as to support the three-axial driving unit 200 to be pivotable about an axis parallel to the tangential-tilt direction TT. While the pair of leaf springs 321, 322 can be provided to support the three-axial driving unit 200 in an exemplary embodiment of the present general inventive concept as illustrated in FIG. 6, there is no limitation on the shape or size of such leaf springs. Accordingly, it is possible that the present general inventive concept can also be applicable to any elements capable of supporting the three-axial driving unit 200 so that the three-axial driving unit 200 is able to pivot about an axis parallel to the tangential-tilt direction TT.

Referring to FIG. 6, the tangential-tilt driving magnetic circuit can include a pair of first tangential-tilt coils 331, a pair of second tangential-tilt coils 332, a pair of first tangential-tilt magnets 341, a pair of second tangential-tilt magnets 342, a pair of first tangential-tilt yokes 351 and a pair of second tangential-tilt yokes 352.

The pairs of first and second tangential-tilt coils 331, 332 can be repeatedly wound in rectangular forms. The pair of first tangential-tilt coils 331 can be attached to opposite sides of the first wire holder 220 in the tracking direction R, respectively. The pair of second tangential-tilt coils 332 can be attached to opposite sides of the second wire holder 230 in the tracking direction R, respectively.

The first and second tangential-tilt magnets 341, 342 can be provided in pairs. The pair of first tangential-tilt magnets 341 can be disposed on the left front and rear sides of the support member 310 so as to face the pair of first tangential-tilt coils 331. Additionally, the pair of second tangential-tilt magnets 342 can be disposed on the right front and rear sides of the support member 310 so as to face the pair of second tangential-tilt coils 332. The four tangential-tilt magnets 341, 342 can be configured as bar magnets of which upper portions are N poles and lower portions are S poles. Furthermore, magnetic fluxes generated by the four tangential-tilt magnets 341, 342 may flow through the tangential-tilt coils 331, 332.

The first and second tangential-tilt yokes 351, 352 can be provided in pairs, in the form of rectangular bars. The pair of first tangential-tilt yokes 351 can face each other on the left front and rear sides of the support member 310, and the pair of first tangential-tilt magnets 341 can be each attached to inner walls of the pair of first tangential-tilt yokes 351 so as to support the pair of first tangential-tilt yokes 351. Additionally, the pair of second tangential-tilt yokes 352 can face each other on the right front and rear sides of the support member 310, and the pair of second tangential-tilt magnets 342 can be each attached to inner walls of the pair of second tangential-tilt yokes 352 so as to support the pair of second tangential-tilt yokes 352. The four tangential-tilt yokes 351, 352 may support the four tangential-tilt magnets 341, 342 so that magnetic fluxes generated by the four tangential-tilt magnets 341, 342 can be focused onto the four tangential-tilt coils 331, 332 facing the four tangential-tilt magnets 341, 342.

Referring to FIGS. 6-8, the tangential-tilt driving circuit including the four tangential-tilt coils 331, 332, four tangential-tilt magnets 341, 342 and four tangential-tilt yokes 351, 352 may drive the three-axial driving unit 200 in the tangential-tilt direction TT. In other words, the tangential-tilt driving circuit may allow the three-axial driving unit 200 to tilt about the central axis parallel to the tracking direction R, as illustrated in FIGS. 6-8.

For example, referring to FIG. 6, currents can be applied to each of the four tangential-tilt coils 331, 332, during tangential-tilt driving. The pair of first tangential-tilt coils 331 can be subject to an electromagnetic force generated in the focusing direction by interaction with the pair of first tangential-tilt magnets 341. Similarly, the pair of second tangential-tilt coils 332 can be subject to an electromagnetic force generated in the focusing direction by interaction with the pair of second tangential-tilt magnets 342.

In this situation, current I1 applied to the pair of first tangential-tilt coils 331 can flow in an opposite direction to current I2 applied to the pair of second tangential-tilt coils 332, as illustrated in FIG. 6. For example, if current I1 flows clockwise, current I2 may flow counterclockwise, or alternatively if current I1 flows counterclockwise, current I2 may flow clockwise.

As illustrated in FIG. 8, the electromagnetic force P1 applied to the pair of first tangential-tilt coils 331 can act upwards, whereas the electromagnetic force P2 applied to the pair of second tangential-tilt coils 332 can act downwards. Alternatively, when the electromagnetic force P1 acts downwards, the electromagnetic force P2 may act upwards. Therefore, the three-axial driving unit 200 (see FIG. 6) may tilt by a predetermined angle from the central axis parallel to the tracking direction R by the electromagnetic forces P1, P2, and thus it is possible to drive the objective lens L in the tangential-tilt direction TT, as illustrated in FIG. 8.

Accordingly, it is possible that gaps between the lens holder 240 and the three-axial driving magnets 261, 262 can be maintained uniformly, even when the objective lens L is driven in the tangential-tilt direction, and thus distances between the coils 271 to 274 in the lens holder 240 and the three-axial driving magnets 261, 262 may also be maintained constant, as illustrated in FIG. 8. Additionally, it is possible to prevent bending of the plurality of wires 250 which support the lens holder 240.

Therefore, it is possible for an optical pickup actuator 100 of the present general inventive concept to prevent an instability of focusing driving, tracking driving and radial-tilt driving of the objective lens L caused by tangential-tilt driving of the objective lens L. It is also possible to provide a four-axial driving optical pickup actuator having improved servo control characteristics of the objective lens L.

Although a few embodiments of the present general inventive concept have been illustrated and described, it will be appreciated by those skilled in the art that changes may be made in these embodiments without departing from the principles and spirit of the general inventive concept, the scope of which is defined in the appended claims and their equivalents.

## Claims

1. An optical pickup actuator (100) comprising:
a three-axial driving unit (200) to independently drive an objective lens (L) to focus a laser beam onto a disk in a focusing direction (F), a tracking direction (R) and a radial-tilt direction (RT), respectively; and
a tangential-tilt driving unit (300) to drive the three-axial driving unit (200) in a tangential-tilt direction (TT) to drive the objective lens (L) in the tangential-tilt direction (TT).

2. The optical pickup actuator (100) of claim 1, wherein the tangential-tilt driving unit (200) comprises:
a pivot support (320) to support the three-axial driving unit (300) to be pivotable about an axis parallel to the tangential-tilt direction; and
a tangential-tilt driving magnetic circuit to provide an electromagnetic force to enable the three-axial driving unit (200) to be pivotable about the axis parallel to the tangential-tilt direction.

3. The optical pickup actuator (100) of claim 2, wherein the three-axial driving unit comprises:
a base (210);
a first wire holder (220) and a second wire holder (230) separated from each other on the base (210) in a tangential direction;
a lens holder (240) having the objective lens (L) disposed between the first wire holder (220) and the second wire holder (230) and spaced apart from the base (210) by a predetermined distance;
a plurality of wires (250) having first ends connected to one of the first wire holder (220) and the second wire holder (230) and second ends connected to the lens holder (240) to support the lens holder (240); and
a three-axial driving magnetic circuit to drive the lens holder (240) in the focusing direction, tracking direction and radial-tilt direction.

4. The optical pickup actuator (100) of claim 3, wherein the tangential-tilt driving magnetic circuit comprises:
one or more first tangential-tilt coils (331) attached to the first wire holder (220), and one or more second tangential-tilt coils (332) attached to the second wire holder (230); and
one or more first tangential-tilt magnets (341) disposed to face the one or more first tangential-tilt coils (331), and one or more second tangential-tilt magnets (342) disposed to face the one or more second tangential-tilt coils (332),
wherein an electromagnetic force generated by the one or more first tangential-tilt coils (331) and one or more first tangential-tilt magnets (341) flows in an opposite direction to an electromagnetic force generated by the one or more second tangential-tilt coils (332) and one or more second tangential-tilt magnets (342).

5. The optical pickup actuator (100) of claim 4, wherein the tangential-tilt driving magnetic circuit further comprises:
a first tangential-tilt yoke (351) and second tangential-tilt yoke (352) to which the one or more first tangential-tilt magnets (341) and one or more second tangential-tilt magnets (342) are attached, respectively.

6. The optical pickup actuator (100) of claim 4, wherein the one or more first tangential-tilt coils (331) and one or more second tangential-tilt coils (332) are provided in pairs and attached to opposite sides of the first wire holder (210) and opposite sides of the second wire holder (230) in the tracking direction, and
the one or more first tangential-tilt magnets (341) and one or more second tangential-tilt magnets (342) are provided in pairs.

7. The optical pickup actuator (100) of claim 6, wherein the tangential-tilt driving magnetic circuit further comprises:
a pair of first tangential-tilt yokes (351) to which a pair of first tangential-tilt magnets (341) are attached; and
a pair of second tangential-tilt yokes (352) to which a pair of second tangential-tilt (342) magnets are attached.

8. The optical pickup actuator (100) of claim 7, wherein the pivot support (320) comprises a pair of leaf springs (321, 322) disposed to face each other in the tracking direction to support a lower side of the base (210).

9. The optical pickup actuator (100) of claim 8, wherein the tangential-tilt driving unit (300) further comprises:
a support member to support the first and second tangential-tilt yokes (351, 352) and the pair of leaf springs (321, 322).

10. The optical pickup actuator of claim 9, wherein the support member (310) is formed integrally with the first and second tangential-tilt yokes (351, 352).

11. An optical recording/reproducing apparatus comprising an optical pickup (20) to record information onto a disk (D) and/or to reproduce the information from the disk (D), a driving unit (30) to drive the optical pickup, and a control unit to control the driving unit,
wherein the optical pickup (20) comprises:
an optical system to detect a laser beam reflected from the disk (D), the optical system having an objective lens (L) to focus a laser beam onto the disk (D); and
an optical pickup actuator (100) to according to any one claims 1 to 10.
